# DEMANDE DE BREVET EUROPEEN

(11) **EP 1 972 824 A1**
(43) Date de publication de la demande: **24.09.2008**
(21) Numéro de dépôt: 08305054.2
(22) Date de dépôt: 13.03.2008
(51) Int. Cl.: F16D 65/12

(54) **Disque de frein et système de frein de véhicule automobile ainsi que leur procédé d'élaboration**

(30) Priorité: 19.03.2007 FR 0753913
(71) Demandeur: PEUGEOT CITROËN AUTOMOBILES S.A., 78140 Vélizy Villacoublay (FR)
(72) Inventeur: Denis, Sébastien, 75017, PARIS (FR)

(57) **Abrégé**

L'invention concerne un disque de frein comprenant une série d'ailettes (2) dites ailettes principales, les ailettes s'étendant radialement par rapport à l'axe du disque et étant uniformément angulairement espacées, caractérisé en ce qu'à un angle déterminé et diviseur de 360° une succession d'ailettes principales (2) est supprimée, modifiée ou remplacée par d'autres formes de manière périodique sur toute la surface du disque.

L'invention concerne aussi un procédé de conception d' un tel disque et un système de frein comprenant un tel disque.

Application pour l'atténuation du bruit d'un disque de frein de véhicule automobile.

## Description

La présente invention concerne un disque de frein et un système de freinage de véhicule automobile, de même que le procédé pour leur élaboration.

Plus particulièrement, la présente invention concerne la diminution du bruit engendré par le freinage grâce à un disque de frein spécialement élaboré pour diminuer les phénomènes de résonance qui conduisent à certaines fréquence à un bruit intempestif appelé en général crissement de frein.

Comme le montre le document FR-A-2 756 894, un disque de frein ventilé est constitué classiquement de deux plateaux espacés et reliés par plusieurs ailettes de refroidissement délimitant des canaux radiaux d'aspiration. La face extérieure de chaque plateau constitue la piste annulaire de freinage. Ce disque de frein est monté coaxialement sur un moyeu solidaire en rotation d'une extrémité d'un arbre de transmission.

Pour ce type de disque, à certaines fréquences, il se produit un couplage vibratoire de l'ensemble disque/frein/plaquettes sous excitation du frottement plaquettes/disque qui crée ledit crissement de frein.

Bien que ce phénomène soit connu depuis longtemps, aucune solution satisfaisante pour le combattre n'a été élaborée. De nombreux essais anti-bruit ont été tentés comme l'essai de divers matériaux, le criblage anti-bruit, le décalage d'appui, le clip-on, le graissage ou des modifications de masses sur l'étrier et sur la chape du système de freinage.

Le document FR-A- 2 756 894 n'est pas dirigé vers ce problème de crissement de frein mais concerne des améliorations apportées dans le système de ventilation à ailettes du disque.

Par ailleurs, US-A-5 188 203 décrit un disque de frein avec des ailettes divisées en deux groupes occupant des positions différentes sur le disque. L'orientation des ailettes diminue la quantité de matière nécessaire pour réaliser ces ailettes tout en gardant la même rigidité que pour des arrangements d'ailettes déjà connus. La position des ailettes n'est en aucun cas corrélée avec la problématique de réduction du bruit pour un système de freinage et ce document ne donne aucune indication à ce sujet.

D'autres documents comme FR-A-2 678 694 concernent la ventilation d'un disque de frein avec des canaux de ventilation pour l'aération du disque. Le document US-A-6 193 023 montre aussi un disque de frein avec des plots et des ailettes. Toutes ces dispositions sur le disque sont uniquement dans un but de ventilation sans que la géométrie du disque soit étudiée dans le but de limiter l'émission d'un bruit intempestif lors du freinage.

De l'état de la technique précédemment évoqué, il est clair que bien que le problème de la réduction de bruit lors du freinage soit depuis longtemps connu, aucune démarche constructive de réduction de bruit n'a été couronnée de succès, les essais de réduction de bruit tentés ayant été des essais de routine dans les compétences de l'homme de l'art concernant simultanément de nombreux éléments du système de freinage sans qu'une étude sur la cause de ces bruits n'ait été entreprise et qu'une démarche logique soit établie entre ces essais.

En outre, la problématique de traitement des crissements de freins est un sujet complexe qui est spécifique à chaque ensemble disque/frein/plaquettes, de sorte que les solutions classiquement employées ne sont parfois pas suffisantes au traitement du défaut.

Le concept à la base de la présente invention est de considérer le disque de frein comme l'élément à traiter en priorité pour diminuer le bruit lors du freinage, et en particulier de considérer la géométrie du disque comme la caractéristique essentielle pour apporter une solution au problème. Il conviendra donc de sélectionner tout d'abord une géométrie de disque qui soit avantageuse pour la diminution du bruit, de la modifier le cas échéant pour améliorer ses caractéristiques mécaniques puis d'optimiser les paramètres des autres éléments du système de freinage à adjoindre à ce disque de frein.

La demanderesse a constaté qu'un niveau important de décibels émis atteignant parfois 100 décibels et 70 décibels pour 48% des cas se produit à une fréquence de 2,7 kHz.

Des études de modélisation des systèmes de freinage sur un modèle élément de calcul d'instabilités, confirmées par des mesures holographiques de ces systèmes ont montré après calcul des énergies de déformation des diverses pièces mises en jeu que près de 50% des énergies de déformation était imputable au disque contre 17% à l'étrier, 10% pour le boîtier et 7% pour la chape.

Le disque de frein est donc un élément essentiel à prendre en considération pour le traitement du bruit de freinage. On peut agir notamment sur sa géométrie pour réduire l'émission du bruit.

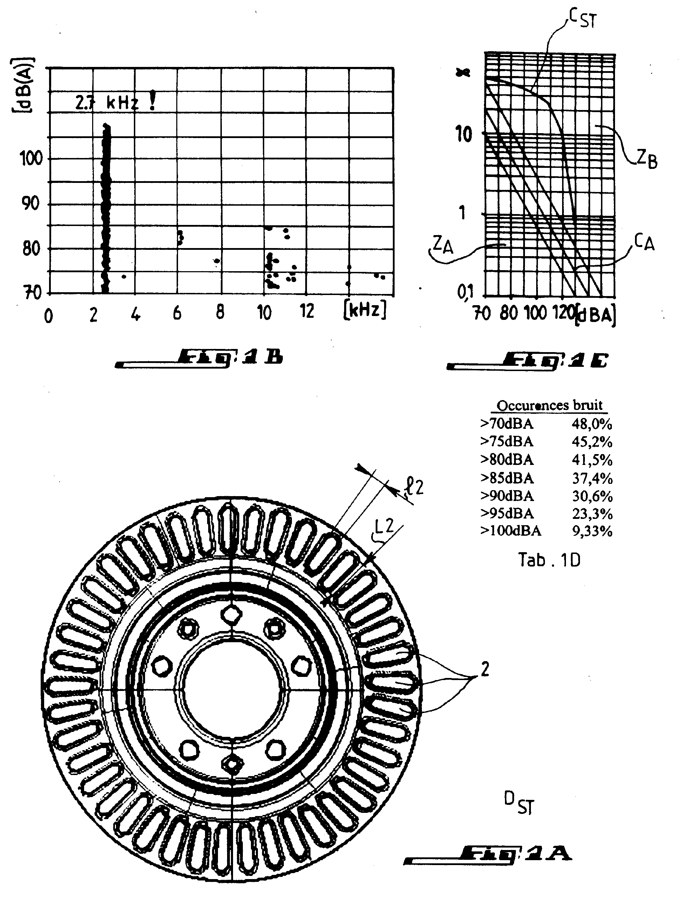

En effet l'étude des modes montre que le mode complexe à 2,7kHz résulte du couplage de deux modes d'anneaux hors plan à trois lignes nodales diamétrales à des fréquences très rapprochées de 2,942 et 2,945 kHz comme le montre la figure 1, où l'on voit un pic de décibels pour une fréquence de 2,7kHz. Il convient donc de séparer les deux modes de telle sorte qu'ils ne se couplent plus pour former l'instabilité et en conséquence ne puissent plus générer de bruits. Ceci peut être obtenu en modifiant la géométrie du disque de frein.

On doit cependant garder à l'esprit que toute modification de la géométrie du disque peut entraîner un affaiblissement des caractéristiques mécaniques de ce disque ce qui serait au détriment de la qualité du freinage et de la résistance du disque, donc de la sécurité du véhicule.

Le but de la présente invention est de diminuer l'émission de bruit lors du freinage dans un système de freinage en optimisant les caractéristiques anti-bruit des divers éléments de ce système de freinage, principalement en concevant un disque de frein avec une géométrie plus favorable à cette diminution, tout en laissant sensiblement inchangées les caractéristiques mécaniques des divers éléments nécessaires pour la qualité de freinage et la fiabilité du disque mis en jeu.

Pour l'élaboration d'un système de freinage, ce problème est résolu par un procédé avec les étapes suivantes :
- a) détermination par expérimentation de la fréquence pour laquelle le niveau de bruit est élevé,
- b) détermination par calcul sur un modèle complexe de cette fréquence et calcul des énergies de déformation des différentes pièces du système de frein à disque,
- c) conception de plusieurs formes de disque avec une architecture spécifique concernant notamment la répartition des ailettes concentriques selon les calculs théoriques sur modèles,
- d) réalisation de prototypes correspondant à ces diverses formes de disque déterminées théoriquement,
- e) essais de mesure de bruit sur ces prototypes, par exemple calcul du potentiel bruit et/ou essai bruit sur banc dynamométrique,
- f) le cas échéant, reconception de certaines formes de disques selon les résultats obtenus et reconduction de l'étape précédente pour les prototypes de ces disques,
- g) rejet de certains prototypes ne donnant pas satisfaction au niveau de l'atténuation du bruit,
- h) tests mécaniques sur les formes restantes, notamment en ce qui concerne la variation d'épaisseur et la tenue thermomécanique,
- i) compte tenu des résultats des tests, évolution de la géométrie des formes de disque pour améliorer les résultats aux tests mécaniques et reconduction de l'étape précédente avec le cas échéant essais bruit sur la nouvelle géométrie élaborée,
- j) sélection des prototypes ayant obtenu les meilleurs résultats aux tests,
- k) détermination de nouveaux paramètres optimisés pour les autres parties du système de frein et essais sur banc dynamométrique avec les formes sélectionnées de disque pour l'évaluation du bruit,
- l) détermination des systèmes de frein ayant obtenu les meilleurs résultats aux tests dynamométriques.

L'invention concerne aussi un disque de frein comprenant une série d'ailettes dites ailettes principales, les ailettes s'étendant radialement par rapport à l'axe du disque et étant uniformément angulairement espacées, caractérisé en ce qu'à un angle déterminé et diviseur de 360° une succession d'ailettes principales est supprimée, modifiée ou remplacée par d'autres formes de manière périodique sur toute la surface du disque.

L'invention concerne aussi un système de frein comprenant un tel disque de frein.

La succession d'ailettes principales supprimée est préférentiellement de trois ailettes.

Dans un mode de réalisation de l'invention, les ailettes principales supprimées sont remplacées par des ailettes de plus petite longueur et/ou de plus petite largeur, dites ailettes de remplacement, ces ailettes de remplacement pouvant présenter une même longueur ou avoir une longueur différente. Quand les ailettes de remplacement sont en nombre impair, l'ailette de remplacement centrale présente une plus petite taille que les autres ailettes de remplacement.

Dans un autre mode de réalisation de l'invention, les successions d'ailettes principales supprimées sont remplacées par au moins une série de plots, de préférence circulaires, disposés selon un cercle coaxial au disque de frein. Avantageusement, les successions d'ailettes principales supprimées sont remplacées par au moins deux série de plots disposés selon des cercles concentriques de diamètre distinct.

Préférentiellement, deux cercles de série de plots sont disposés selon des cercles concentriques de diamètre distinct et s'étendent au niveau des extrémités des ailettes principales.

Avantageusement, chaque plot d'une série s'étendant sur un cercle, est radialement aligné avec un plot d'une autre série s'étendant sur un autre cercle.

Chaque ailette principale supprimée peut aussi être remplacée par deux plus petites ailettes radialement alignées et radialement espacées.

Les ailettes principales peuvent être supprimées périodiquement pour des angles de 120° ou 60°.

Avantageusement, les ailettes principales sont similaires et de forme oblongue.

L'invention va maintenant être décrite plus en détail mais de façon non limitative en regard des figures annexées, dans lesquelles :
- la figure 1a est une représentation schématique d'un disque de frein standard ;
- la figure 1b est une courbe statistique de niveau de bruit selon une gamme de fréquence pour le disque de frein standard représenté en figure 1a, avec une matrice standard obtenue lors d'un essai bruit sur banc dynamométrique ;
- la figure 1c est une courbe de l'occurrence cumulée de niveau de manifestation de bruits (en pourcentage) en fonction du niveau de décibels pour le disque de frein standard représenté en figure 1a ;
- le tableau 1d représente la répartition de l'occurrence cumulée de niveau de manifestation de bruits (en pourcentage) en fonction de seuils de décibels pour le disque de frein standard représenté en figure 1a ;
- la figure 2 est une représentation schématique d'une première réalisation du disque de frein conformément à l'invention ;
- la figure 3 est une représentation schématique d'une seconde réalisation du disque de frein conformément à l'invention ;
- la figure 4a est une représentation schématique d'une troisième réalisation du disque de frein conformément à l'invention ;
- la figure 4b est une courbe statistique de niveau de bruit selon une gamme de fréquence pour le disque de frein représenté en figure 4a avec une matrice standard obtenue dans lors d'un essai bruit sur banc dynamométrique ;
- la figure 4c est une courbe de l'occurrence cumulée de niveau de manifestation de bruits (en pourcentage) en fonction du niveau de décibels pour le disque de frein selon l'invention représenté en figure 4a ;
- le tableau 4d représente la répartition de l'occurrence cumulée de niveau de manifestation de bruits (en pourcentage) en fonction de seuils de décibels pour le disque de frein selon l'invention représenté en figure 4a ;
- la figure 5 est une représentation schématique d'une quatrième réalisation du disque de frein conformément à l'invention ;
- la figure 6a représente un détail du disque de frein représenté en figure 5 ;
- la figure 6b représente un détail du disque de frein représenté en figure 4a ;
- la figure 7 est une représentation schématique d'une cinquième réalisation du disque de frein conformément à l'invention ;
- le tableau 8 donne une comparaison des modes propres selon les fréquences présentés par le disque standard avec ceux du disque représenté en figure 2 ;
- la figure 9 est une représentation schématique d'une sixième réalisation du disque de frein conformément à l'invention ;
- la figure 10 est une représentation schématique d'une septième réalisation du disque de frein conformément à l'invention.

La figure 1a représente un disque de frein standard DST comprenant une série d'ailettes 2 dites ailettes principales, les ailettes principales 2 s'étendant radialement par rapport à l'axe du disque et étant uniformément angulairement espacées. Ces ailettes 2 sont des ailettes dites de refroidissement délimitant des canaux radiaux d'aspiration. Ces ailettes principales 2 sont similaires et de forme oblongue, en s'étendant radialement sur une longueur L2 et tangentiellement sur une largeur 12.

La figure 1b a déjà été décrite en partie précédemment, notamment en ce qui concerne la fréquence de 2,7 kHz où se produit l'émission de bruit la plus élevée pour un disque de frein standard. Il convient de remarquer en plus, sur la figure 1c, que pour la fréquence de 2,7 kHz la courbe CST de l'occurrence cumulée de manifestation de bruits en fonction du niveau de décibels se situe nettement au dessus de la courbe CA de bruit acceptable ce qui montre l'acuité du problème de bruit. La courbe CST se situe ainsi dans un domaine ZB correspondant à un niveau de bruit inacceptable, et non dans le domaine ZA correspondant à un niveau de bruit acceptable. En outre, comme mentionné dans le tableau 1d, pour la fréquence de 2,7 kHz une occurrence de 48% des coups de frein se situe au dessus de 70 dBA.

Conformément à la présente invention, Il convient donc d'élaborer un disque de frein qui puisse diminuer cette manifestation de bruit.

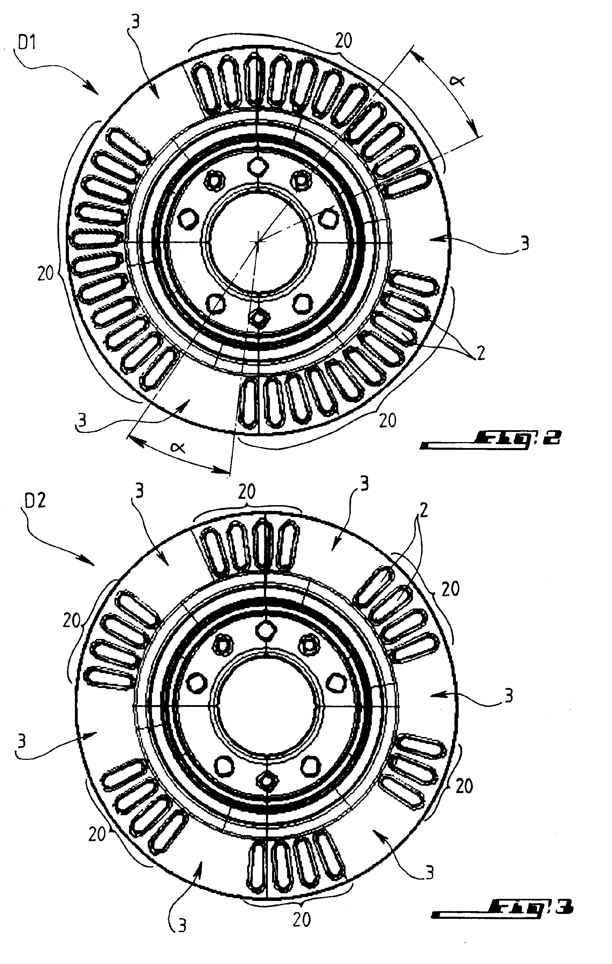

Sur les figures 2, 3, 4a, 5, 7, 9 et 10 qui vont suivre, le disque de frein conforme à l'invention sera toujours montré en coupe pour mieux montrer les changements effectués sur les ailettes principales 2. On voit que ces disques présentent des discontinuités 3 dans la succession d'ailettes principales 2. C'est essentiellement la périodicité de ces discontinuités 3 et les éléments de remplacement des ailettes principales 2 manquantes qui déterminent les caractéristiques propres de chaque forme de disque.

Selon un premier mode de réalisation illustré à la figure 2, le disque D1 présente tous les 120°, c'est-à-dire trois fois sur sa surface, une suppression 3 de la série de trois ailettes principales 2 successives. L'objectif de ce disque 1 était d'éloigner deux modes à 2,942 kHz et 2,945 kHz identifiés pour le disque standard afin d'éviter qu'ils ne se couplent dans la plage du fonctionnement du frein.

De la sorte, le disque D1 comprend trois quartiers d'ailettes 20 répartis tous les 120° où :
- chaque quartier d'ailettes 20 est constitué d'une série d'ailettes principales 2 s'étendant radialement par rapport à l'axe du disque et étant uniformément angulairement espacées ;
- chaque quartier d'ailettes 20 est espacé angulairement des autres quartiers d'ailettes 20 d'un secteur 3 d'angle α, ledit angle α correspondant avantageusement à l'angle du secteur formé par n ailettes principales 2 successives où n est supérieur (voire égal) à 1, avantageusement n est égal 3 ; et
- chaque secteur 3 d'angle α correspondant à un espace sans aucune ailette sur le disque D1.

Selon un deuxième mode de réalisation représenté en figure 3, le disque D2 présente tous les 60°, c'est-à-dire six fois sur sa surface, une suppression 3 de la série de trois ailettes principales 2 successives.

De la sorte, le disque D2 comprend six quartiers d'ailettes 20 répartis tous les 60° où :
- chaque quartier d'ailettes 20 est constitué d'une série d'ailettes principales 2 s'étendant radialement par rapport à l'axe du disque et étant uniformément angulairement espacées ;
- chaque quartier d'ailettes 20 est espacé angulairement des quartiers d'ailettes 20 le jouxtant d'un secteur 3 d'angle α, ledit angle α correspondant sensiblement à l'angle du secteur formé par n (avantageusement n est égal à 3) ailettes principales 2 successives ; et
- chaque secteur 3 d'angle α correspondant à un espace sans aucune ailette sur le disque D1.

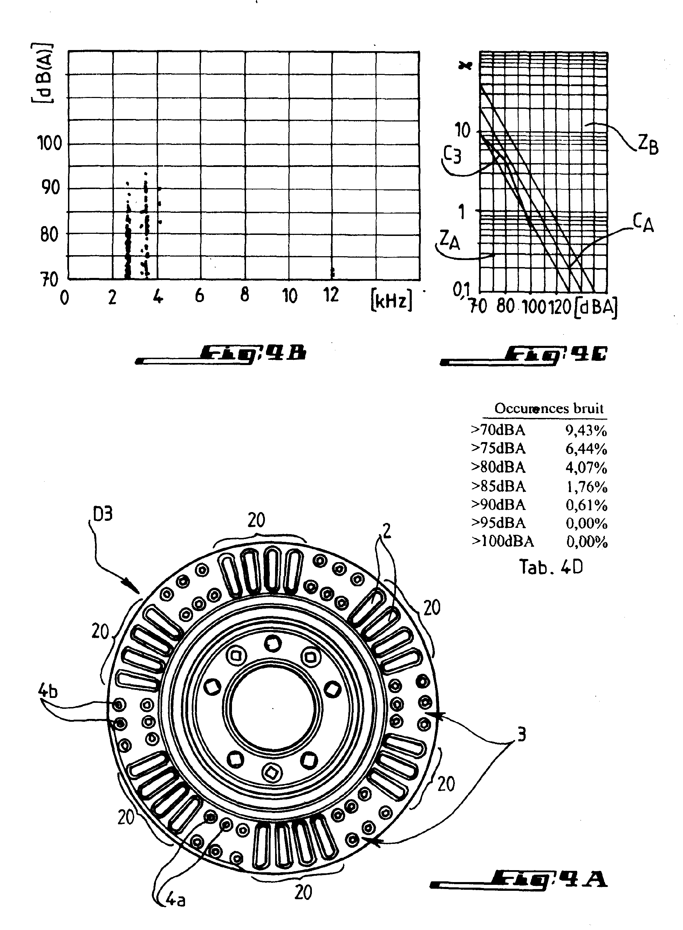

Selon un troisième mode de réalisation représenté en figure 4a, le disque D3 présente tous les 60°, c'est-à-dire six fois sur sa surface, au lieu d'une succession de trois ailettes principales 2 deux séries de trois plots circulaires 4a, 4b, chacune de ces séries étant disposées sur un cercle respectif, les deux cercles étant concentriques, la circonférence de chaque cercle s'étendant respectivement au niveau des extrémités des ailettes principales 2. A chacun des trois plots extérieurs 4b correspond un plot intérieur 4a aligné radialement avec ce dernier.

De la sorte, le disque D3 comprend six quartiers d'ailettes 20 répartis tous les 60° où :
- chaque quartier d'ailettes 20 est constitué d'une série d'ailettes principales 2 s'étendant radialement par rapport à l'axe du disque et étant uniformément angulairement espacées ;
- chaque quartier d'ailettes 20 est espacé angulairement des quartiers d'ailettes 20 le jouxtant d'un secteur 3 d'angle α, ledit angle α correspondant sensiblement à l'angle du secteur formé par n ailettes principales 2 successives où n est supérieur (voire égal) à 1, avantageusement n est égal 3 ;
- chaque secteur 3 d'angle α présentant deux séries de n plots circulaires 4a, 4b tel que décrit ci-dessus.

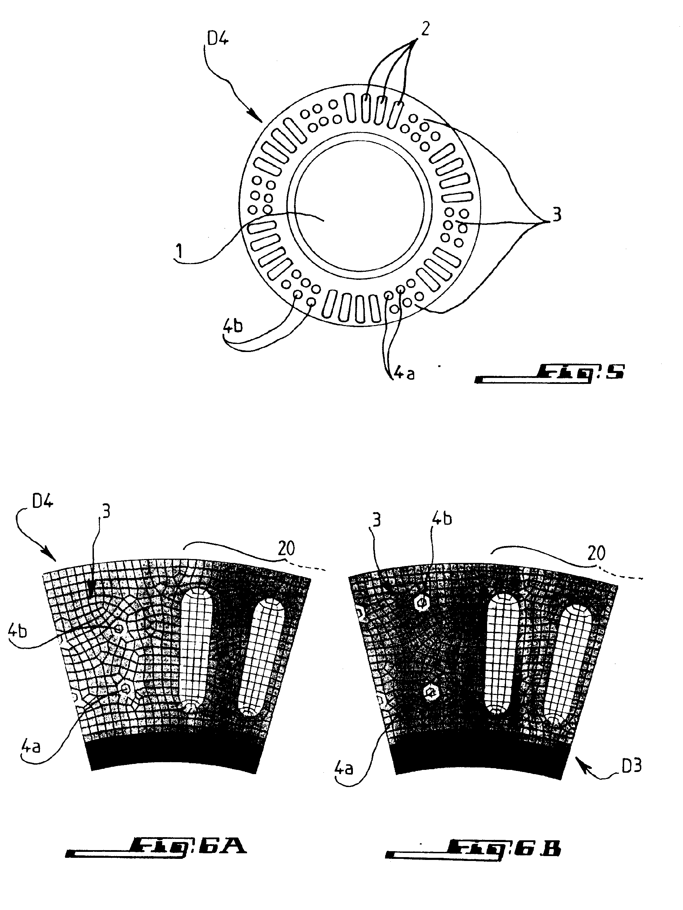

Selon un quatrième mode de réalisation illustré en figure 5, le disque D4 présente tous les 60°, c'est-à-dire six fois sur sa surface, au lieu d'une succession de trois ailettes principales 2 deux séries de trois plots circulaires 4a, 4b semblables à celles du disque D3 ; à la différence que, et comme illustré aux figures 6a et 6b, les plots extérieurs 4b du disque D4 sont situés plus proches des plots intérieurs 4a que dans le cas du disque D3.

On voit que la réalisation du disque D4 est proche de D3, ce mode de réalisation ayant été conçu en accord avec le procédé selon la présente invention lors d'une étape d'élaboration ultérieure comme on le verra par la suite.

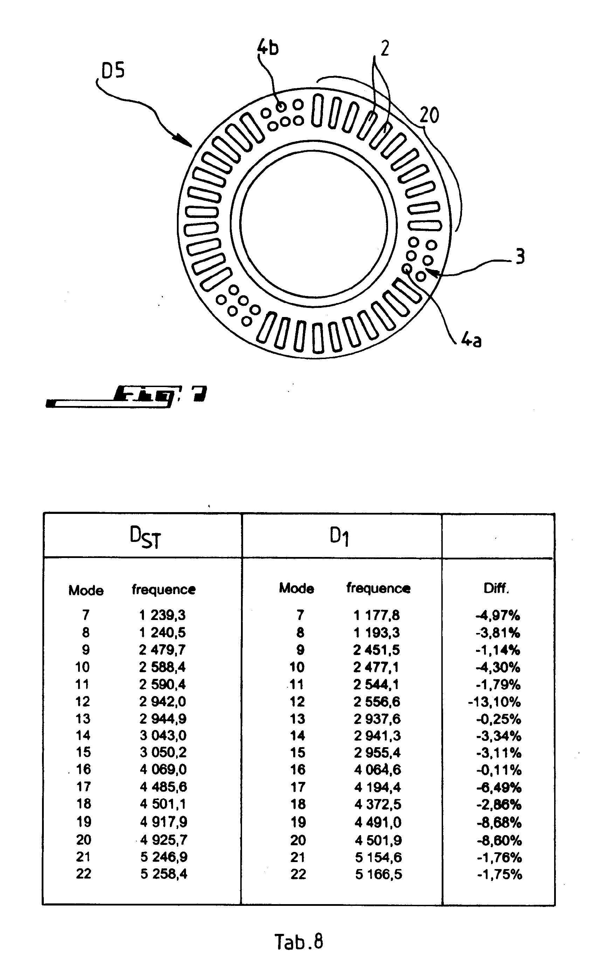

Selon un cinquième mode de réalisation représenté en figure 7, le disque D5 présente tous les 120°, c'est-à-dire trois fois sur sa surface, au lieu d'une succession de trois ailettes principales 2 deux séries de trois plots circulaires 4a, 4b, chacune de ces séries étant disposées sur un cercle respectif, les deux cercles étant concentriques.

De la sorte, le disque D5 comprend trois quartiers d'ailettes 20 répartis tous les 120° où :
- chaque quartier d'ailettes 20 est constitué d'une série d'ailettes principales 2 s'étendant radialement par rapport à l'axe du disque et étant uniformément angulairement espacées ;
- chaque quartier d'ailettes 20 est espacé angulairement des quartiers d'ailettes 20 le jouxtant d'un secteur 3 d'angle α, ledit angle α correspondant sensiblement à l'angle du secteur formé par n (avantageusement n est égal à 3) ailettes principales 2 successives ;
- chaque secteur 3 d'angle α présentant deux séries de trois plots circulaires 4a, 4b tel que décrit ci-dessus.

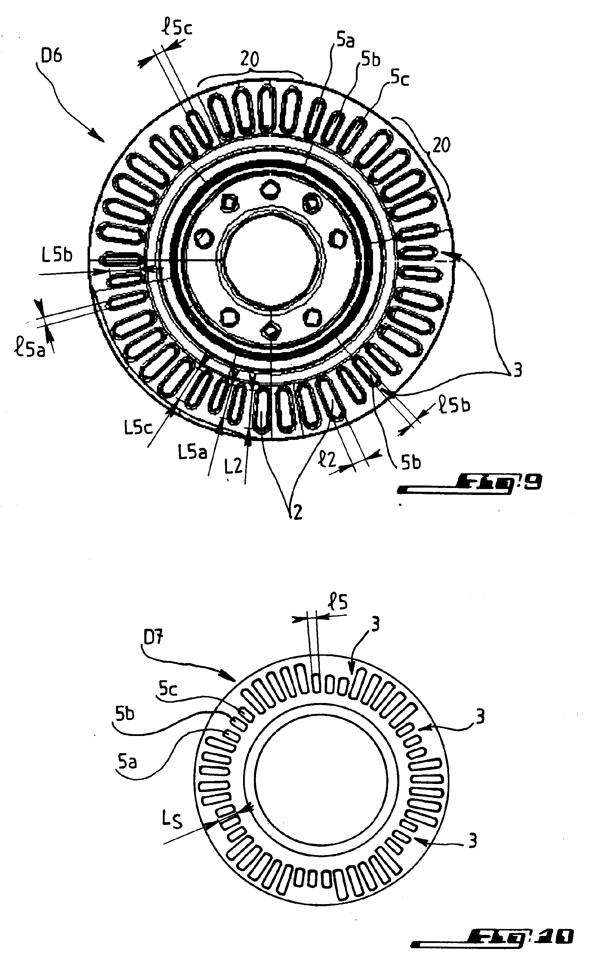

Selon un sixième mode de réalisation illustré en figure 9, le disque D6 présente tous les 60°, c'est-à-dire six fois sur sa surface, au lieu d'une succession de trois ailettes principales 2 une série de trois ailettes 5a, 5b, 5c dites ailettes de remplacement. Ces ailettes de remplacement 5a, 5b, 5c sont uniformément angulairement espacées et sont de forme oblongue, en s'étendant radialement sur une longueur respectivement L5a, L5b, L5c et tangentiellement sur une largeur respectivement 15a, 15b, 15c. Selon l'invention, les longueurs respectives des ailettes de remplacement 5a, 5b, 5c sont toutes inférieures à la longueur L2 d'une ailette principale 2, et/ou les largeurs respectives des ailettes de remplacement 5a, 5b, 5c sont toutes inférieurs à la largeur 12 d'une ailette principale 2. En outre, l'ailette de remplacement centrale 5b de la série présente une longueur L5b inférieure à celles L5a, L5c des deux autres 5b, 5c l'entourant.

Selon un septième mode de réalisation illustré en figure 10, le disque D7 présente tous les 60°, c'est-à-dire six fois sur sa surface, au lieu d'une succession de trois ailettes principales 2 une série de trois ailettes de remplacement 5a, 5b, 5c semblables à celles du disque D6 ; à la différence que les ailettes de remplacement sont similaires et présentent une même longueur L5 inférieure à celle d'une ailette principale 2. Ces ailettes de remplacement 5a, 5b, 5c peuvent également présenter une même largeur 15 inférieure à celle d'une ailette principale 2.

Le disque D1 obtenu selon le premier mode de réalisation et illustré en figure 2 a été le premier disque élaboré et présente d'excellentes propriétés anti-bruit. Conformément au tableau 8, lors de l'étape des expériences théoriques de calcul mode propre, c'est-à-dire l'étape c) du procédé selon la présente invention suivant les étapes a) et b) déjà détaillées dans la partie introductive de la présente description, ce disque n'a présenté qu'un seul mode à 3 diamètres (mode N°13) au lieu de deux modes pour le disque standard DST (mode N° 12 et 13), le mode N° 12 ayant été décalé de 2,942 kHz à 2,556 kHz et ayant changé de forme.

Conformément à l'étape d) du procédé selon la présente invention, un prototype disque D1 a été alors élaboré et a donné d'excellents résultats aux tests calcul potentiel bruit et au test essai sur banc dynamométrique selon l'étape e) du procédé, où il a été vérifié que la fréquence 2,7 kHz ne correspondait plus à une instabilité du prototype engendrant un fort niveau de décibels (on se reportera à la figure 1 pour la comparaison avec le disque DST). Les étapes f) et g) de reconception de la géométrie du disque et de rejet de certaines formes de disque ne donnant pas satisfaction n'avaient donc pas lieu d'être avec le disque D1 ainsi conçu.

L'étape h) suivante du procédé selon l'invention a consisté à soumettre le prototype disque D1 à divers tests mécaniques pour éprouver ses propriétés mécaniques, notamment sa tenue mécanique et sa variation d'épaisseur en conditions de fonctionnement. Il s'est avéré que ce disque ne satisfaisait pas complètement les conditions de tenue mécanique et de variation d'épaisseur. Il était donc avantageux de trouver des géométries de disque qui reprendraient le principe du disque D1 de séparation des modes à 3 diamètres par changement périodique d'une succession d'ailettes mais permettraient d'obtenir de meilleurs résultats aux tests de tenue mécanique.

Selon l'étape i) du procédé, il a été donc été élaboré toute une série de nouvelles géométries dont certaines ont été décrites aux figures 4a, 5, 7, 9 et 10. Il est à noter que les disques décrits aux figures n' ont pas un effet limitatif sur la série de nouvelles géométries et qu'on peut envisager d'autres formes de réalisation de ces disques. Par exemple, mais de manière non limitative, on peut envisager un angle de 30° entre les interruptions de successions d'ailettes, d'autres formes de remplacement que des plots circulaires, par exemple des plots carrés ou rectangulaires avec leur plus grand côté s'étendant sensiblement radialement. Il est possible aussi de prévoir une petite ailette à la place de chaque plot ce qui dans les troisième, quatrième et cinquième modes de réalisation donnerait le remplacement de trois ailettes consécutives principales 2 par trois groupes de deux petites ailettes de remplacement, les deux petites ailettes pouvant être alignées radialement. L'idée principale à la base de la conception de toutes ces formes est de garder le principe du disque D1 concernant l'interruption de la succession d'ailettes principales tout en assurant le remplacement des ailettes supprimées par des moyens assurant une meilleure continuité mécanique du disque que ce disque.

Lors des tests calcul potentiel bruit selon l'étape de procédé i), les versions D4 et D6 ont obtenu les meilleurs résultats. Les autres versions de disques ont aussi obtenu des résultats satisfaisants.

Toujours conformément à l'étape i) du procédé selon la présente invention, ces bons résultats ne sont pas suffisants pour obtenir des disques présentant toutes les garanties aussi bien pour l'atténuation du bruit que pour la résistance mécanique et thermomécanique. Les divers prototypes sont alors soumis à des tests mécaniques ou des vérifications par calcul, concernant notamment la variation d'épaisseur et la tenue thermomécanique. En effet, la présence d'ailettes de différentes tailles ou géométries sur le disque peut engendrer un risque de vibration au freinage et/ou une variation d'épaisseur après roulage.

Selon le test calcul cycle autoroute Allemagne avec comparaison avec le disque standard DST, le disque D4 a présenté une variation d'épaisseur de 64 µm comparée à une variation de 1 µm pour le disque DST, ce qui n'est pas très satisfaisant.

Conformément à l'étape i) du procédé d'élaboration d'un disque selon la présente invention, des changements dans la géométrie du disque D4 ont été effectués. Ces changements sont sensés diminuer la variation d'épaisseur en gardant toutefois les mêmes résultats aux tests de calcul potentiel bruit. Ainsi a été conçu le prototype D3 qui avec ses plots arrangés sur deux cercles concentriques passant respectivement par les extrémités des ailettes principales garde les mêmes dispositions favorables en ce qui concerne l'atténuation du bruit. Cet arrangement permet en outre de limiter le fléchissement de la zone circonférentielle du disque et la variation d'épaisseur obtenue n'atteint plus que 17µm ce qui augmente la tenue mécanique de ce disque. Le cas échéant pour vérification, un tel prototype élaboré pour convenir aux tests mécaniques peut repasser le test de calcul de potentiel de bruit.

Comme tests mécaniques, les disques peuvent subir des essais de tenue à la rupture selon la norme B34-5126. Ceci a été fait par exemple pour les disques D6 et D3 qui n'ont pas montré de rupture après essai ni de fissure circonférentielle au ressuage. Aucune différence notable n'a été remarquée par rapport au disque standard DST de référence.

Selon l'étape j) de sélection du procédé de la présente invention, tous les disques décrits dans les figures ont obtenu des résultats satisfaisants, notamment les modes de réalisation D6, D4 et D3. Le disque D3 est cependant préféré au disque D4 en regard des tests mécaniques et notamment d'une variation d'épaisseur plus favorable.

La figure 4b représente une courbe statistique de niveau de bruit selon une gamme de fréquence pour un disque de frein D3 avec une matrice standard. On voit que la configuration de ce disque D3 ne permet pas d'éliminer complètement le niveau de bruit à la fréquence de 2,7kHz. Cependant, par rapport à l'échantillon standard DST, on constate une importante réduction de l'occurrence cumulée, 9,43% au lieu de 48% (voir tableau 4d) pour des niveaux de bruit supérieurs à 70 dBA, et du niveau de bruit, 91 dBA au lieu de 107 dBA. On voit aussi en figure 4c que la courbe C3 de l'occurrence cumulée en fonction du niveau de bruit pour le disque D3 se situe toujours dans le domaine acceptable ZA ce qui n'était jamais le cas pour la référence standard DST à la figure 1c.

Lors de l'étape k) suivante, les divers paramètres des autres éléments du système de freinage peuvent être optimisés pour une atténuation du bruit, sachant que la principale cause de bruit qui était imputable au disque est maintenant maîtrisée.

Tout ceci permet une sélection efficace d'un système de freinage selon l'étape l) finale du procédé selon l'invention.

Ainsi avec la mise en oeuvre de ce procédé, il est possible d'optimiser les divers éléments et notamment le disque de frein pour atténuer le bruit émis lors du freinage dit crissement de frein.

Les disques de frein selon l'invention, qui ne diffèrent pas notoirement des disques de frein originaux dans leurs autres caractéristiques, sont simples à réaliser et à assembler et présentent l'avantage de ne pas entraîner un surcoût élevé. Accessoirement, une économie de masse est réalisée étant donné que ces disques sont plus légers que les disques d'origine, par exemple un gain de masse de 120 g et de 210 g respectivement pour les disques D6 et D3.

L'invention n'est nullement limitée aux modes de réalisation décrits et illustrés qui n'ont été donnés qu'à titre d'exemple.

## Revendications

1. Procédé d'élaboration d'un système de frein à disque présentant une diminution du bruit de freinage dit crissement de frein, ce système de frein comprenant un disque comportant une série d'ailettes disposées concentriquement par rapport au centre de ce disque, un étrier et un boîtier **caractérisé par** les étapes suivantes :
- a) détermination par expérimentation de la fréquence pour laquelle le niveau de bruit est élevé,
- b) détermination par calcul sur un modèle complexe de cette fréquence et calcul des énergies de déformation des différentes pièces du système de frein à disque,
- c) conception de plusieurs formes de disque avec une architecture spécifique concernant notamment la répartition des ailettes concentriques selon les calculs théoriques sur modèles,
- d) réalisation de prototypes correspondant à ces diverses formes de disque déterminées théoriquement,
- e) essais de mesure de bruit sur ces prototypes, par exemple calcul du potentiel bruit et/ou essai bruit sur banc dynamométrique,
- f) le cas échéant reconception de certaines formes de disque selon les résultats obtenus et reconduction de l'étape précédente pour les prototypes de disque,
- g) rejet de certains prototypes ne donnant pas satisfaction au niveau de l'atténuation du bruit,
- h) tests mécaniques sur les formes restantes, notamment en ce qui concerne la variation d'épaisseur et la tenue thermomécanique,
- i) compte tenu des résultats des tests, évolution de la géométrie des formes de disque pour améliorer les résultats aux tests mécaniques et reconduction de l'étape précédente avec le cas échéant essais bruit sur des prototypes avec une nouvelle géométrie élaborée,
- j) sélection des formes de disque ayant obtenu les meilleurs résultats aux tests,
- k) détermination de nouveaux paramètres pour les différentes parties du système de frein et essais sur banc dynamométrique avec les prototypes sélectionnés pour l'évaluation du bruit,
- l) détermination des systèmes de frein ayant obtenu les meilleurs résultats aux tests dynamométriques.

2. Disque de frein comprenant une série d'ailettes (2) dites ailettes principales, les ailettes principales (2) s'étendant radialement par rapport à l'axe du disque et étant uniformément angulairement espacées, **caractérisé en ce qu'**à un angle déterminé et diviseur de 360° une succession d'ailettes principales est supprimée, modifiée ou remplacée par d'autres formes de manière périodique sur toute la surface du disque.

3. Disque de frein selon la revendication 2, **caractérisé en ce que** cette succession d'ailettes principales est de trois ailettes.

4. Disque de frein selon l'une quelconque des revendications précédentes 2 ou 3, **caractérisé en ce que** les ailettes principales supprimées sont remplacées par des ailettes (5a, 5b, 5c) de plus petite longueur et/ou de plus petite largeur, dites ailettes de remplacement, ces ailettes de remplacement (5a, 5b, 5c) pouvant présenter une même longueur ou avoir une longueur différente.

5. Disque de frein selon la revendication 4, **caractérisé en ce que** quand les ailettes de remplacement (5a, 5b, 5c) sont en nombre impair, l'ailette de remplacement centrale (5b) présente une plus petite taille que les autres ailettes de remplacement (5a, 5c).

6. Disque de frein selon l'une quelconque des revendications précédentes 2 ou 3, **caractérisé en ce que** les successions d'ailettes principales supprimées sont remplacées par au moins une série de plots, de préférence circulaires, disposés selon un cercle coaxial au disque de frein.

7. Disque de frein selon la revendication 6, **caractérisé en ce que** les successions d'ailettes principales supprimées sont remplacées par au moins deux série de plots disposés selon des cercles concentriques de diamètre distinct.

8. Disque de frein selon la revendication 7, **caractérisé en ce que** deux cercles de série (4a, 4b) de plots sont disposés selon des cercles concentriques de diamètre distinct et s'étendent au niveau des extrémités des ailettes principales.

9. Disque de frein selon l'une quelconque des revendications 7 à 8, **caractérisé en ce que** chaque plot d'une série (4a, 4b) s'étendant sur un cercle, est radialement aligné avec un plot d'une autre série (4b, 4a) s'étendant sur un autre cercle.

10. Disque de frein selon l'une quelconque des revendications 2 ou 3, **caractérisé en ce que** chaque ailette principale supprimée est remplacée par deux plus petites ailettes radialement alignées et radialement espacées.

11. Disque de frein selon l'une quelconque des revendications 2 à 8, **caractérisé en ce que** les ailettes principales sont modifiées périodiquement pour des angles de 120° ou 60°.

12. Disque de frein selon l'une quelconque des revendications précédentes, **caractérisé en ce que** les ailettes principales (2) sont similaires et de forme oblongue.

13. Système de frein, **caractérisé en ce qu'**il comprend un disque selon l'une quelconque des revendications 2 à 9.
